# EUROPEAN PATENT APPLICATION

(11) **EP 1 691 351 A2**
(43) Date of publication of application: **16.08.2006**
(21) Application number: 06002871.9
(22) Date of filing: 13.02.2006
(51) Int. Cl.: G11B 5/86, G11B 5/596

(54) **Disk-shaped magnetic recording medium**

(30) Priority: 14.02.2005 JP 2005036768
(71) Applicant: FUJI PHOTO FILM CO., LTD., Minami-Ashigara-shi, Kanagawa-ken (JP)
(72) Inventor: Komatsu, Kazunori, Odawara-shi, Kanagawa (JP); Wakamatsu, Satoshi, Odawara-shi, Kanagawa (JP)
(74) Representative: HOFFMANN EITLE

(57) **Abstract**

The present invention provides a disk-shaped magnetic recording medium (2) in which a servo signal for tracking is recorded as a preformat by a magnetic transfer method. This disk-shaped magnetic recording medium (2) facilitates the manufacture of a master disk (3) which carries information to be transferred. The disk-shaped magnetic recording medium (2) permits the asymmetry of a regenerative signal of a servo signal for tracking which is recorded, facilitates the manufacture of a master disk (3) which carries information to be transferred, and enables a servo signal for tracking to be recorded in a short time by use of a magnetic transfer method.

## Description

### BACKGROUND OF THE INVENTION

### Field of the Invention

The present invention relates to a magnetic recording medium and, more particularly, to a disk-shaped magnetic recording medium having servo information for tracking recorded as a preformat thereon.

### Description of the Related Art

A disk-shaped magnetic recording medium which is a high-density magnetic recording medium (hereinafter sometimes also referred to as a magnetic disk) used in a hard disk device, a flexible disk device, etc. is required to permit high-speed access and to have larger information recording capacity.

In order to realize this high-capacity design, the track width has become narrower and what is called a tracking servo technique for accurately scanning a magnetic head in this narrow track width has played an important role.

In a magnetic disk, servo signals for tracking, address information signals, regenerative clock signals, etc. are recorded at prescribed intervals as preformats in order to perform tracking servo.

There has hitherto been adopted a method which involves recording this preformat by use of a dedicated servo recording device (servo track writer) in magnetic disks piece by piece by use of a magnetic head, and considerable time was taken for each piece of magnetic disk, posing a problem in terms of production efficiency.

As a method of performing this preformating accurately and efficiently in a short time, a magnetic transfer method has been proposed which involves preparing a master disk having a magnetic layer with concavo-convex patterns corresponding to the information to be transferred to a magnetic disk targeted for transfer, which magnetic disk becomes a high-density magnetic recording medium, initially magnetizing beforehand the magnetic layer of the magnetic disk in one direction of tracks, bringing thereafter this initially magnetized magnetic disk and the master disk into close contact with each other, and applying, in this condition, magnetic fields for transfer which are substantially in the direction reverse to the direction of initial magnetization (refer to the Japanese patent Application Laid-Open No. 2001-014667, for example).

In this case, an optimum intensity of an initial DC magnetic field applied to initially magnetize the magnetic field of the magnetic disk was not less than about twice the coercive force Hc of the magnetic layer of the magnetic disk, and an optimum intensity of magnetic fields for transfer was almost the same as the coercive force Hc of the magnetic layer of the magnetic disk.

According to this magnetic transfer method, without a change of a relative position of the master disk and the magnetic disk targeted for transfer, it is possible to statically perform the magnetic recording of the information of the master disk, and besides the time required by recording is very short.

### SUMMARY OF THE INVENTION

Incidentally, it is preferable that the waveform of a regenerative signal of a servo signal for tracking which is recorded as a preformat in a magnetic disk describe a sine wave symmetric in the direction of time axis in one cycle. However, when recording was performed by the above-described magnetic transfer method, it was considerably difficult to obtain a sine wave of the waveform of a regenerative signal symmetric in the direction of time axis in the whole area from a track of an innermost circumference to a track of an outermost circumference.

This is because the magnetization width of the magnetic disk targeted for magnetization depends on the intensity of magnetic fields for transfer, the size of the width of concavo-convex patterns of the master disk, etc. and, therefore, the design of the concavo-convex patterns of the master disk becomes complex. Also, this is because in order to make the waveform of a regenerative signal symmetric in the direction of time axis, it is necessary that the width of either of the concavity and the convexity of the concavo-convex patterns of the master disk be extremely narrow and this poses the problem that the manufacture of the master disk is accompanied by the difficulty with which EB (electron beam) lithography is performed (narrow lithography, pattern inclination), the difficulty with which etching is performed (etching of narrow portions, uniformity of the whole area), the difficulty with which electroforming is performed (electroforming of narrow portions), the difficulty with which magnetic layer forming is performed (coating ability in narrow pattern portions), etc.

The present invention has been made in view of such circumstances and has as its object the provision of a disk-shaped magnetic recording medium in which a servo signal for tracking is recorded as a preformat by a magnetic transfer method and which facilitates the manufacture of a master disk which carries information to be transferred.

To achieve the above-described object, a disk-shaped magnetic recording medium related to a first aspect of the present invention is characterized in that the regenerative signal waveform of a servo signal for tracking recorded as a preformat is asymmetric. In a second aspect of the present invention, the disk-shaped magnetic recording medium of the present invention is characterized in that the waveform of a regenerative signal of a servo signal for tracking is asymmetric in the direction of time axis in one cycle.

According to the present invention, the waveform of a regenerative signal of a servo signal for tracking is asymmetric in the direction of time axis in one cycle. Therefore, this facilitates the manufacture of a master disk which carries servo information for tracking to be transferred and it is possible to record a servo signal for tracking as a preformat by a magnetic transfer method, thereby permitting accurate preformat recording in a short time.

Also, in a third aspect of the present invention, the disk-shaped magnetic recording medium of the present invention is characterized in that the degree of asymmetry is not uniform in the whole area of the disk-shaped magnetic recording medium and has a distribution of values which differ radially. Also, in a fourth aspect of the present invention, the disk-shaped magnetic recording medium of the present invention is characterized in that the degree of asymmetry is lowest in a track of an innermost circumference of the disk-shaped magnetic recording medium and the degree of asymmetry increases from the track of an innermost circumference to a track of an outermost circumference.

According to the present invention, the degree of asymmetry is distributed from a track of an innermost circumference to a track of an outermost circumference in such a manner that the symmetricality of the waveform of a regenerative signal is relatively good in tracks on the inner circumferential side where the symmetricality is relatively necessary and the degree of asymmetry becomes high on the outer circumferential side where there is no substantial problem if the symmetricality of the waveform of a regenerative signal is uniform in the same track even when the symmetricality is relatively rough. Therefore, this facilitates the manufacture of a master disk and at the same time, it is possible to perform the magnetic recording of a servo signal for tracking by use of a magnetic transfer method. Accordingly, accurate preformat recording is possible and the time required by recording is very short.

Also, in a fifth aspect of the present invention, the disk-shaped magnetic recording medium of the present invention is characterized in that the servo signal for tracking is recorded by a magnetic transfer method from servo information which is carried by a master disk.

According to the present invention, it is possible to statically perform the magnetic recording of the information of the master disk, accurate preformat recording is possible, and besides the time required by recording is very short. Furthermore, it is easy to manufacture a master disk which carries the information to be transferred.

As described above, according to a disk-shaped magnetic recording medium of the present invention, in magnetically transferring servo information for tracking to a disk-shaped recording medium from a master disk which carries the servo information for tracking to be transferred by a magnetic transfer method, the manufacture of the master disk becomes easy.

### BRIEF DESCRIPTION OF THE DRAWINGS

Fig. 1 is a plan view which shows a master disk;
Fig. 2 is a perspective view which shows the concavo-convex patterns of a master disk;
Figs. 3A to 3C are conceptual diagrams to explain the magnetic transfer step;
Figs. 4A to 4C are conceptual diagrams 1 to explain the waveform of a regenerative signal;
Figs. 5A to 5C are conceptual diagrams 2 to explain the waveform of a regenerative signal;
Figs. 6A to 6C are conceptual diagrams 3 to explain the waveform of a regenerative signal; and
Fig. 7 is a graph to explain an embodiment.

### DETAILED DESCRIPTION OF THE PREFERRED EMBODIMENTS

A preferred embodiment of a disk-shaped magnetic recording medium related to the present invention will be described in detail below on the basis of the accompanying drawings. In each of the drawings, like reference numerals or characters refer to like members.

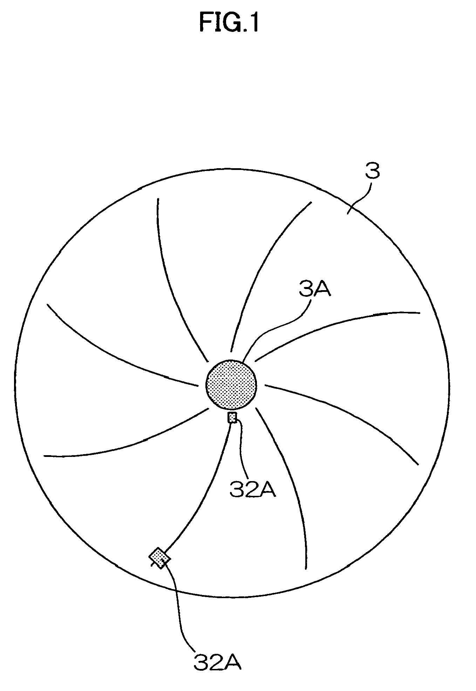

Fig. 1 is a plan view of a master disk. A master disk 3 has the shape of a disk and a center hole 3A is formed in the center thereof. Tracks are formed in the circumferential direction of a circle, with the center of the master disk 3 serving as the center of the circle, and concavities and convexities 32 of patterns corresponding to information to be transferred are formed. The size of the concavities and convexities 32 on an outermost circumference is large in the direction of tracks compared to the size of the concavities and convexities 32 on an innermost circumference.

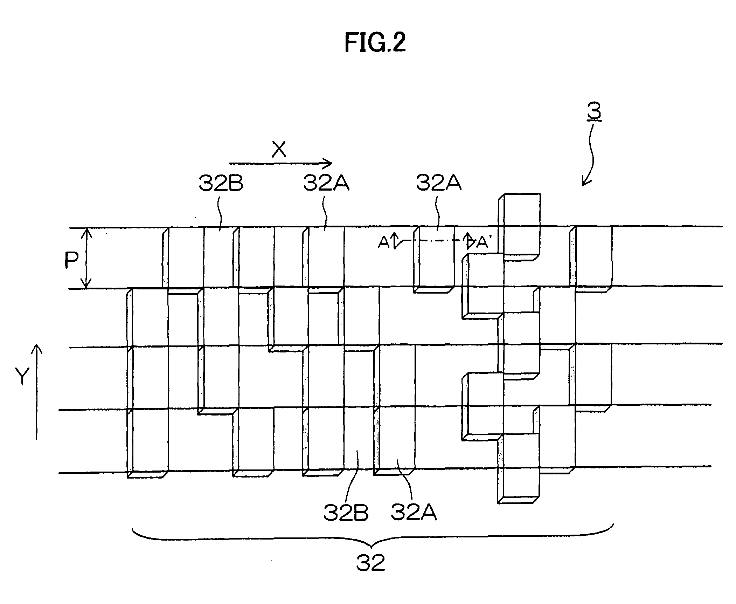

Fig. 2 is a perspective view of part of the master disk 3 and shows part of the concavities and convexities 32 of the master disk formed as concavo-convex patterns corresponding to information to be transferred. As shown in Fig. 2, the concavities and convexities 32 of the master disk 3 are constituted by convexities 32A and concavities 32B.

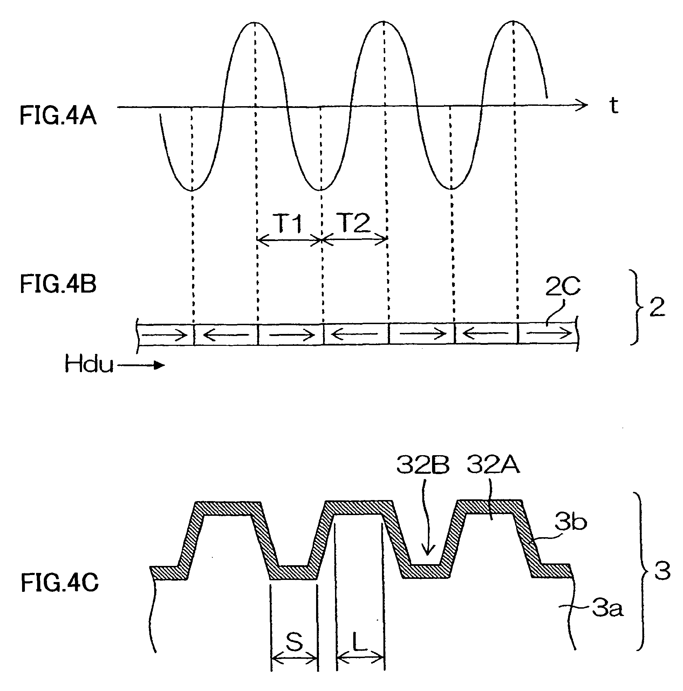

In Fig. 2, the arrow X indicates the circumferential direction (the direction of tracks) of the master disk 3, and the arrow Y indicates the radial direction of the maser disk 3. The reference character P denotes track width. The section of the convexities 32A in the direction of tracks (the section A-A' in Fig. 2) is trapezoidal as shown in Figs. 4C, 5C and 6C, which will be mentioned later.

Nickel, silicon, quartz, glass, aluminum, ceramics, synthetic resins, etc. are used as materials for a substrate 3a of the master disk 3. Soft magnetic materials are used in a magnetic layer 3b, and it is preferable to use Co, Co alloys (CoNi, CoNiZr, CoNbTaZr, etc.), Fe, Fe alloys (FeCo, FeCoNi, FeNiMo, FeAlSi, FeAl, FeTaN), Ni, Ni alloys (NiFe), etc. Among these, it is especially preferable to use FeCo and FeCoNi.

In the formation of the concavities and convexities in the substrate 3a of the master disk 3, the photolithography process, the stamper process, etc. are used. When the photolithography process is used, a photoresist is first formed on the surface of a glass plate (or a quartz plate) which is smooth by spin coating and the like.

Next, the photoresist is irradiated with laser beams (or electron beams) and exposed with patterns corresponding to servo signals. After that, the photoresist is developed and exposed portions are removed, whereby an original disk having concavo-convex patterns by the photoresist is prepared.

Next, the surface of the original disk is plated with Ni (electroformed), whereby a Ni substrate having concavo-convex patterns is fabricated and this Ni substrate is separated from the original disk. This Ni substrate may be used as the master disk 3 as it is. As required, however, a magnetic layer 3b made of a soft magnetic material is formed on the concavo-convex patterns and the Ni substrate is further coated with a protective film and used as the master disk 3.

As described above, Ni or Ni alloys, etc. can be used as metal materials for the substrate 3a made of metal. As plating methods for fabricating this substrate 3a, it is possible to use various kinds of metal film formation processes, such as electroless plating, electroforming, sputtering and ionplating.

A glass substrate, a substrate of aluminum alloy, etc. are used as the magnetic disk targeted for transfer, and an application type magnetic recording layer or a metal thin-film type magnetic recording layer is formed on the surface. As magnetic materials for a metal thin-film type magnetic recording layer, it is possible to use Co, Co alloys (CoPtCr, CoCr, CoPtCrTa, CoPtCrNbTa, CoCrB, CoNi, etc.), Fe, and Fe alloys (FeCo, FePt, FeCoNi).

These magnetic materials permit clear transfer and hence are preferable, because they have large magnetic flux densities and magnetic anisotropy in the same direction as the direction of magnetic field application (the in-plane direction in the case of in-plane recording). To impart necessary magnetic anisotropy to under the magnetic material (the support medium side), it is preferable to provide a nonmagnetic base layer. It is necessary that the crystal structure and lattice constant of this base layer be adapted to the magnetic layer. For this purpose, it is preferable to use Cr, CrTi, CoCr, CrTa, CrMo, NiAl, Ru, etc.

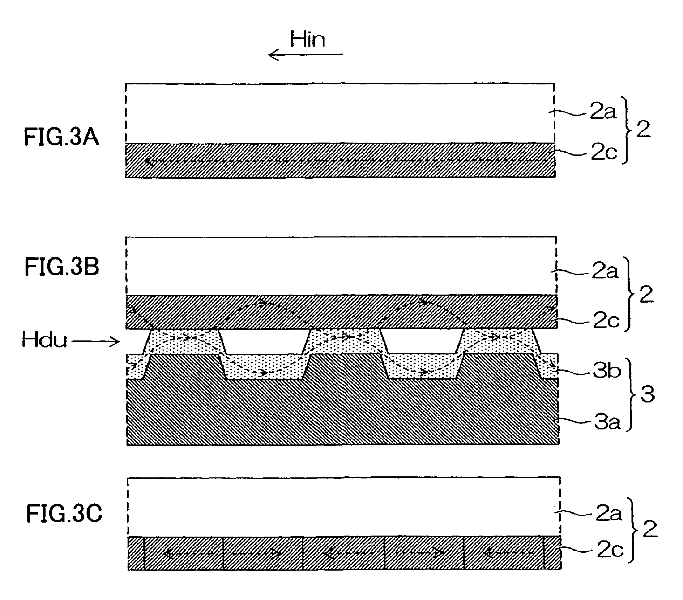

Next, a description will be given below of a transfer method for magnetically transferring magnetic patterns of servo information for tracking to a magnetic disk targeted for transfer by use of this master disk 3. Figs. 3A to 3C are explanatory diagrams which show the magnetic transfer step. In Figs. 3A to 3C, a magnetic layer in the upper part of the magnetic disk 2 is omitted and only transfer to a magnetic layer 2c in the lower part is described to simplify the diagrams and explanation.

First, as shown in Fig. 3A, the initial magnetization of the magnetic disk 2 is performed. In initial magnetization, the magnetic disk 2 is fixed to a chuck stage of an initial magnetization device which is not shown and an initial DC magnetic field Hin along the tangent line direction of tracks by use of a magnet is generated in one direction. At the same time, the chuck stage is rotated with respect to the magnet through one rotation or more, and the application of an initial DC magnetic field to the whole track region of the magnetic layer in the upper part and magnetic layer 2c in the lower part of the magnetic disk 2 is performed.

Incidentally, it is preferred that the initial DC magnetic field Hin be a magnetic field having a coercive force Hc which is not less than twice the coercive force Hc of the magnetic layers of the top surface and bottom surface of the magnetic disk 2. The initial magnetization of the magnetic disk 2 may be performed simultaneously for the magnetic layers of both top and bottom surfaces of the magnetic disk 2 or may also be performed twice, i.e., separately for each of the magnetic layers of the two surfaces.

Next, top and bottom surfaces of the initially magnetized magnetic disk 2 are brought into close contact with the master disk and supported by being sandwiched with a holder, and the top and bottom surfaces of magnetic disk 2 are caused to be held by a rotary device of an application device of magnetic fields for transfer which is not shown.

Subsequently, magnetic fields Hdu in the direction reverse to the direction of the initial magnetization are generated by a magnet, the holder is rotated with respect to the magnet through one rotation or more, the application of magnetic fields for transfer to the whole region of tracks is performed, and the information recorded in the master disk as magnetic patterns is magnetically transferred to the top and bottom surfaces of the magnetic disk 2.

This transfer mechanism is as follows. That is, as shown in Fig. 3B, magnetic information is formed in the magnetic layer 3b of the master disk 3 as concavo-convex magnetic layer patterns. A magnetic field stronger than the magnetic fields Hdu for transfer is applied to the surface of the magnetic layer 2c of the magnetic disk 2 which is not in contact with the magnetic layer 3b of this master disk 3. Therefore, when the coercive force Hc of magnetic fields for transfer exceeds the coercive force Hc of the magnetic layer 2c of the magnetic disk 2, the magnetization of this part becomes reversed.

On the other hand, in the magnetic layer 2c of the magnetic disk 2 in contact with the magnetic layer 3b of the master disk 3, magnetic fields for transfer Hdu are concentrated in the magnetic layer 3b of the master disk 3. That is, in this part, magnetic fields for transfer are shielded. As a result, because only a magnetic field which is much weaker than magnetic fields for transfer Hdu is applied to the magnetic layer 2c of the magnetic disk 2, the magnetization of the magnetic disk 2 is not affected by magnetic fields for transfer Hdu and remains in the direction of initial magnetization, and a magnetization condition as shown in Fig. 3C is obtained. As a result of this, the patterned magnetic information formed in the magnetic layer 3b of the master disk 3 is transferred to the magnetic layer 2c of the magnetic disk 2 and magnetically recorded.

Incidentally, the intensity of magnetic fields for transfer Hdu is preferably 0.6 to 1.3 times the coercive force Hc of the magnetic layers of the top surface and bottom surface of the magnetic disk 2, more preferably 0.8 to 1.2 times, and most preferably 1 to 1.1 times.

Next, the magnetic disk 2 of the present invention 2 will be described on the basis of Figs. 4A to Fig. 7. Figs. 4A, 5A and 6A each show the waveform of a regenerative signal from the magnetic disk 2 after magnetic transfer, Figs. 4B, 5B and 6B each show a magnetization pattern formed in the magnetic layer 2c of the magnetic disk 2, and Figs. 4C, 5C and 6C each show the section of the concavo-convex patterns 32 in the master disk 3.

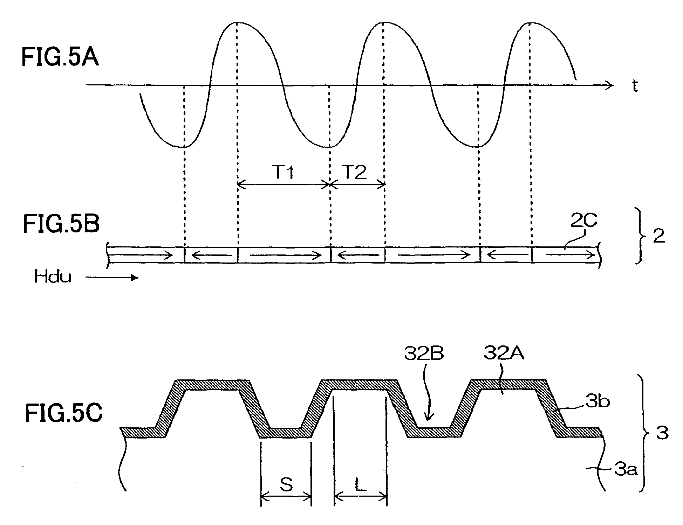

Figs. 4A to 4C correspond to a track of an innermost circumference of the magnetic disk 2, and Figs. 5A, 5B and 5C correspond to a track of an outermost circumference of the magnetic disk 2. In the waveform of a regenerative signal, the time axis is taken as abscissa and the amplitude is taken as ordinate. For the track of an innermost circumference, as shown in Fig. 4C, the width of the top surface (referred to as the land width L) of the convexities 32A of the master disk 3 and the width of the bottom surface (referred to as the space S) of the concavities 32B are formed to have almost the same size (L ≒ S) and the magnetic layer 3b is formed on the convexities 32A and concavities 32B.

By performing magnetic transfer, with the intensity of magnetic fields Hdu applied during transfer adjusted to a value most suited to the track of an innermost circumference, it is possible to form a magnetization pattern as shown in Fig. 4B in the magnetic layer 2c of the magnetic disk 2 and to obtain a waveform of a regenerative signal in the shape close to a sine wave as shown in Fig. 4A.

That is, in one cycle of the waveform of a regenerative signal, the time T1 from the top to the bottom and the time T2 from the bottom to the next top are almost equal to each other (T1 ≒ T2).

Also for the track of an outermost circumference, as shown in Fig. 5C, the width of the top surface (the land width) L of the convexities 32A of the master disk 3 and the width of the bottom surface (the space)S of the concavities 32B are formed to have almost the same size (L ≒ S) and the magnetic layer 3b is formed on the convexities 32A and concavities 32B. However, in the case of the track of an outermost circumference, the land width L and the space S are formed wider than the land width L and the space S in the track of an innermost circumference.

In this state, a magnetization pattern as shown in Fig. 5B is obtained, and the waveform of a regenerative signal becomes a waveform which is asymmetric in the direction of time axis in one cycle. That is, the waveform is such that in one cycle of the waveform of a regenerative signal, the time T1 from the top to the bottom and the time T2 from the bottom to the next top differ from each other (T1 ≠ T2)

The degree of asymmetry (T1/T2) of this waveform of a regenerative signal is distributed in such a manner that it increases gradually from the track of an innermost circumference to the track of an outermost circumference of the magnetic disk 2. However, within the same track, the degree of asymmetry (T1/T2) of this waveform of a regenerative signal is the same.

It is most preferred that this waveform of a regenerative signal have T1 = T2 in the whole area of the magnetic disk 2 (that is, T1/T2 = 1). However, in tracks on the inner circumferential side of the magnetic disk 2, the size of the concavities and convexities 32 of the master disk 3 is minute and requirements for the waveform of a signal are severe, whereas toward tracks on the outer circumferential side, the size of the concavities and convexities 32 increases accordingly, with the result that even when the waveform of a regenerative signal is asymmetric to some degree, there is no practical problem if the degree of asymmetry (T1/T2) within the same track is the same.

For example, in the case of a magnetic disk 2 having a nominal size of 0.85 inch, an allowable range of the degree of asymmetry of the waveform of a regenerative signal is T1/T2 = 0.67 to 1.5 or so in the innermost circumferential track and T1/T2 = 0.4 to 2.5 or so in the outermost circumferential track.

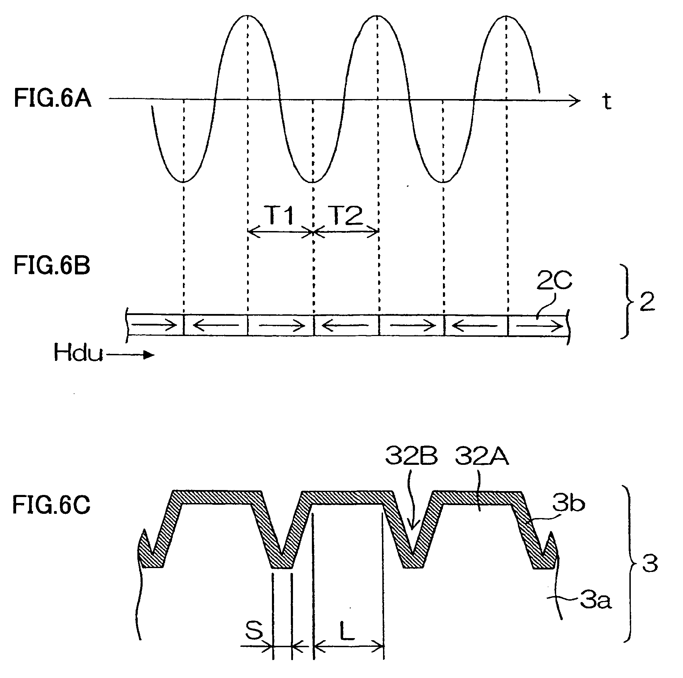

The degree of asymmetry (T1/T2) of the waveform of a regenerative signal depends on the magnetization width of the magnetic disk 2 for which transfer has been performed, and the magnetization width depends on the intensity of magnetic fields for transfer and the width of the concavo-convex patterns of the master disk 3. Figs. 6A, 6B and 6C show an example of a case where the width of the concavities and convexities 32 of the master disk 3 is changed in order to approximate the degree of asymmetry of the waveform of a regenerative signal to 1 (T1 ≒T2).

In the case of Figs. 6A to 6C, the space S between the convexities 32A of the concavities and convexities 32 of the master disk 3 is very narrow, and the manufacture of the master disk 3 is accompanied by the difficulty with which EB lithography is performed (narrow lithography, pattern inclination), the difficulty with which etching is performed (etching of narrow portions, uniformity of the whole area), the difficulty with which electroforming is performed (electroforming of narrow portions), and the difficulty with which magnetic layer forming is performed (coating ability in narrow pattern portions), posing great problems in manufacture.

In the magnetic disk 2 of the present invention, magnetic transfer is performed with an intensity of magnetic fields for transfer most suited to the pattern width of the concavities and convexities 32 of the master disk 3 corresponding to the track of an innermost circumference of which the accuracy of a regenerative signal is required, the asymmetricality of the waveform of a regenerative signal of the track of an innermost circumference in the direction of time axis is approximated to 1, and the asymmetricality of the waveform of a regenerative signal in the direction of time axis is allowed in a range from the track of an innermost circumference to the track of an outermost circumference which does not pose a practical problem.

For this reason, it is possible to manufacture the master disk 3 at low cost without the complex design of the concavo-convex patterns of the master disk 3 and without the difficulties in the manufacture of the master disk 3 (difficulty in EB lithography, difficulty in etching, difficulty in electroforming, difficulty a magnetic layer formation, etc.) and as a result, it is possible to provide an inexpensive magnetic disk 2.

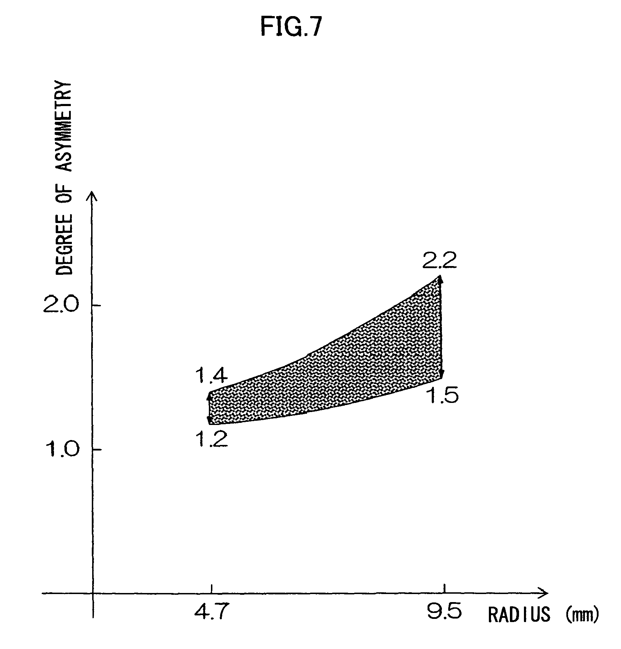

By using multiple master disks 3 having concavities and convexities of different sizes, a servo signal for tracking was magnetically transferred to multiple magnetic disks 2 having a nominal size of 0.85 inch. Fig. 7 shows results of an investigation of the degree of asymmetry (T1/T2) of the waveform of a regenerative signal of the multiple magnetic disks 2 in the direction of time axis.

As shown in Fig. 7, the degree of asymmetry of the waveform of a regenerative signal in the direction of time axis in the innermost circumferential track (radius: 4.7 mm) was 1.2 to 1.4. The degree of asymmetry in the outermost circumferential track (radius: 9.5 mm) was 1.5 to 2.2.

Tracking servo which poses no practical problem was possible in these multiple magnetic disks 2.

As described above, according to a disk-shaped magnetic recording medium related to the present invention, the waveform of a regenerative signal of a servo signal for tracking is allowed to be asymmetric in the direction of time axis in one cycle. Therefore, the servo signal for tracking can be recorded as a preformat by a magnetic transfer method by use of a master disk 3 and the master disk 3 which is used can be manufactured at low cost, easily and efficiently.

Incidentally, although in the above-described embodiment, the degree of asymmetry of the waveform of a regenerative signal was described as the ratio of the time T1 from the top to the bottom of the waveform to the time T2 from the bottom to the next top (T1/T2), it can be defmed as (T2/T1).

## Claims

1. A disk-shaped magnetic recording medium (2), wherein a regenerative signal waveform of a servo signal for tracking recorded as a preformat is asymmetric.

2. The disk-shaped magnetic recording medium (2) according to claim 1, wherein the waveform of the regenerative signal of the servo signal for tracking is asymmetric in a direction of time axis in one cycle.

3. The disk-shaped magnetic recording medium (2) according to claim 2, wherein a degree of asymmetry is not uniform in a whole area of the disk-shaped magnetic recording medium (2) and has a distribution of values which differ radially.

4. The disk-shaped magnetic recording medium (2) according to claim 3, wherein the degree of asymmetry is lowest in a track of an innermost circumference of the disk-shaped magnetic recording medium (2) and the degree of asymmetry increases from the track of the innermost circumference to a track of an outermost circumference.

5. The disk-shaped magnetic recording medium (2) according to any one of claims 1, 2, 3 or 4, wherein the servo signal for tracking is recorded by a magnetic transfer method from servo information which is carried by a master disk (3).
